# EUROPÄISCHE PATENTSCHRIFT

(11) **EP 3 009 283 B1**
(45) Veröffentlichungstag und Bekanntmachung des Hinweises auf die Patenterteilung: **06.11.2019**
(21) Anmeldenummer: 15183550.1
(22) Anmeldetag: 02.09.2015
(51) Int. Cl.: B60J 7/02, B60J 7/05, B60J 7/053

(54) **ANTRIEBSSYSTEM FÜR EIN BEWEGLICHES DACHTEIL EINES KRAFTFAHRZEUG-DACHMODULS**
DRIVE SYSTEM FOR A MOVEABLE ROOF PANEL OF A MOTOR VEHICLE ROOF MODULE
SYSTEME D'ENTRAINEMENT POUR UNE PARTIE DE TOIT MOBILE D'UN MODULE DE TOIT DE VEHICULE AUTOMOBILE

(30) Priorität: 17.10.2014 DE 102014221120
(43) Veröffentlichungstag der Anmeldung: 20.04.2016
(73) Patentinhaber: BOS GmbH & Co. KG, 73760 Ostfildern (DE)
(72) Erfinder: Eberst, Hartmut, 73529 Schwäbisch Gmünd (DE); Heidan, Michael, 70569 Stuttgart (DE); Stapler, Waldemar, 71032 Böblingen (DE)
(74) Vertreter: Patentanwälte Ruff, Wilhelm, Beier, Dauster & Partner mbB

(56) Entgegenhaltungen:
- EP-A1- 2 650 156
- WO-A1-2008/049409
- WO-A1-2014/045338
- DE-A1-102006 060 369
- DE-A1-102011 085 177
- DE-B3-102009 041 903
- FR-A1- 2 971 458

## Beschreibung

Die Erfindung betrifft ein Antriebssystem für ein bewegliches Dachteil eines Kraftfahrzeug-Dachmoduls, mit wenigstens einer Trägerleiste, die seitlich an dem Dachteil befestigt ist, mit wenigstens einem Steuerschlitten, der über ein Antriebsmittel in einer seitlich längs des Dachteils verlaufenden Führungsbahn linearbeweglich verfahrbar ist, mit wenigstens einer Ausstellmechanik, die die Trägerleiste und damit das Dachteil verschwenkt, anhebt und absenkt, sowie mit einem in Fahrzeuglängsrichtung hinter dem beweglichen Dachteil angeordneten, feststehenden Dachbereich, wobei das bewegliche Dachteil aus einer Schließstellung in eine Hubstellung ausschwenkbar und in eine Öffnungsstellung absenkbar und nach hinten unter den Dachbereich verfahrbar ist.

Ein derartiges Antriebssystem ist für Schiebe-Hebe-Dachmodule bei Personenkraftwagen allgemein bekannt; wie zum Beispiel in Dokument DE 10 2011 085 177 oder WO 2008/049409. Das Dachmodul weist ein vorderes bewegliches Dachteil sowie einen feststehenden, hinteren Dachbereich auf. An gegenüberliegenden Längsseiten des Dachmoduls ist jeweils eine Führungsbahn vorgesehen, über die das bewegliche Dachteil zwischen einer Schließstellung und einer Öffnungsstellung verlagerbar ist. In der Öffnungsstellung ist das bewegliche Dachteil in Fahrzeuglängsrichtung nach hinten unter den feststehenden Dachbereich verschoben. Zur Verlagerung des Dachteils ist in jeder Führungsbahn ein Steuerschlitten vorgesehen, wobei die beiden gegenüberliegenden Steuerschlitten über synchronisierte Antriebsmittel längs der Führungsbahnen verlagert werden. Zudem ist dem Dachteil auf seinen gegenüberliegenden Seiten jeweils eine Ausstellmechanik zugeordnet, die ebenfalls synchronisiert zueinander betätigt werden, um das Dachteil in eine Lüfterstellung hochzuschwenken und für die Überführung in eine Öffnungsstellung nach unten abzusenken, und um das Dachteil schließlich wieder in seine Schließstellung zu überführen.

Aufgabe der Erfindung ist es, ein Antriebssystem der eingangs genannten Art zu schaffen, das mit einfachen Mitteln eine zuverlässige Überführung des beweglichen Dachteils in seine verschiedenen Zwischen- und Endstellungen ermöglicht.

Diese Aufgabe wird dadurch gelöst, dass die Trägerleiste an ihrem vorderen Stirnendbereich an einem Ausgleichselement um ein Schwenkgelenk schwenkbeweglich gelagert ist, das relativ zu einer vorderen Führungsanordnung der Ausstellmechanik abhängig von der Bewegungsstellung des Dachteils in unterschiedliche Positionen verlagerbar ist. Erfindungsgemäß sind die verschiedenen Funktionsteile im Bereich der gegenüberliegenden Längsseiten des Dachteils gespiegelt angeordnet, so dass die beschriebenen Funktionsteile wie der Steuerschlitten, die Trägerleiste, die vordere Führungsanordnung und das Ausgleichselement jeweils paarweise vorgesehen sind. Da die gegenüberliegenden Funktionsteile jedoch relativ zu einer vertikalen Fahrzeugmittellängsebene spiegelsymmetrisch gestaltet und synchron zueinander beweglich sind, wird zur Vereinfachung nachfolgend lediglich das Antriebssystem auf einer Seite beschrieben. Die entsprechend gegenüberliegende Seite ist analog ausgeführt. Die erfindungsgemäße Lösung eignet sich in besonders vorteilhafter Weise für den Einsatz bei einem Personenkraftwagen, wobei vorzugsweise das Antriebssystem gemeinsam mit dem beweglichen Dachteil und dem feststehenden Dachbereich vormontiert in einem als Baueinheit handhabbaren Dachmodul vorgesehen sind. Beim Einbau des Dachmoduls in einen entsprechenden Dachausschnitt des Personenkraftwagens erfolgt dann die Verbindung mit entsprechend fahrzeugseitig, insbesondere dachseitig vorgesehenen Funktionsabschnitten. Das Ausgleichselement gewährleistet, dass das bewegliche Dachteil bei einer Überführung aus einer Lüfterstellung, in der das Dachteil schräg nach oben ausgestellt ist, in eine Öffnungsstellung mit seinem vorderen und/oder hinteren Stirnrandbereich an entsprechenden Bauteil- oder Funktionsabschnitten des feststehenden Dachbereichs oder eines frontseitigen Rahmenteils des Dachmoduls bei einer Absenkbewegung nach unten vorbeigeführt werden kann, ohne mit den entsprechenden Funktionsabschnitten oder Bauteilabschnitten in Berührung zu gelangen. Gleiches gilt bei einer umgekehrten Rückführung des Dachteils aus der Öffnungsstellung in die Schließstellung und die Lüfterstellung. In der Öffnungsstellung ist das Dachteil unter die durch den feststehenden Dachbereich definierte Dachaußenkontur nach unten abgesenkt und mit zu dem hinteren Dachbereich in Hochrichtung beabstandet unter diesen nach hinten verschoben. Die erfindungsgemäße Lösung ermöglicht das Vorsehen lediglich einer einzelnen Führungsbahn in einer einzelnen Führungsebene, wodurch die Bauhöhe des Antriebssystems reduziert ist und innerhalb des Fahrzeuginnenraums des Personenkraftwagens eine erhöhte Kopffreiheit zur Verfügung steht.

Gemäß der Erfindung ist das Ausgleichselement als Ausgleichshebel gestaltet, der an der Führungsanordnung um eine Schwenkachse schwenkbeweglich gelagert ist, und der einen Steuerabschnitt sowie einen Ausgleichsfortsatz umfasst, die relativ zu der Schwenkachse zu gegenüberliegenden Seiten abragen, wobei der Ausgleichsfortsatz das Schwenkgelenk der Trägerleiste trägt und der Steuerabschnitt mit dem Steuerschlitten mechanisch gekoppelt ist. Der Ausgleichshebel ermöglicht über entsprechende Schwenkbewegungen des das Schwenkgelenk der Trägerleiste tragenden Ausgleichsfortsatzes die gewünschten Relativbewegungen des Dachteils bei einer Überführung in unterschiedliche Bewegungspositionen, um das Dachteil an den angrenzenden Funktionsabschnitten des Dachmoduls vorbeiführen zu können. Über den Steuerabschnitt des Ausgleichshebels, der mit dem Steuerschlitten gekoppelt ist, können die entsprechenden Ausgleichsbewegungen des Ausgleichsfortsatzes in Abhängigkeit von der jeweiligen Stellung des Steuerschlittens und damit in Abhängigkeit von den entsprechenden Bewegungspositionen des Dachteils (der Trägerleiste) erfolgen.

In weiterer Ausgestaltung ist die mechanische Kopplung des Steuerabschnitts mit dem Steuerschlitten als Kulissenführung gestaltet, die eine relative Längsverschiebbarkeit mit einer relativen Höhenverlagerbarkeit zwischen Steuerabschnitt und Steuerschlitten miteinander kombiniert, um abhängig von der Bewegungsstellung des Dachteils und der Trägerleiste eine Verschwenkung des Ausgleichsfortsatzes um geringe Schwenkwinkel zu bewirken. Die Kulissenführung bewirkt eine Zwangsführung des Ausgleichshebels und damit des Ausgleichsfortsatzes in Abhängigkeit von der Bewegung des Steuerschlittens, wodurch die gewünschten Ausgleichsbewegungen im Bereich des Schwenkgelenks der Trägerleiste erzielt werden.

In weiterer Ausgestaltung umfasst die Kulissenführung ein den Steuerabschnitt zumindest abschnittsweise im Querschnitt umgreifendes Umgriffsprofil, und der Steuerabschnitt ist als in Hochrichtung über ihre Länge verteilt mit Krümmungsabschnitten versehene formstabile Steuerleiste ausgeführt. Vorzugsweise umgreift das Umgriffsprofil den Querschnitt des Steuerabschnitts vollständig, um so eine allseitige Flankierung des Steuerabschnitts durch das Umgriffsprofil zu erzielen. Aufgrund der Krümmungsabschnitte des als Steuerleiste gestalteten Steuerabschnitts führt eine Relativbewegung zwischen dem Umgriffsprofil und dem Steuerabschnitt zwangsläufig auch zu einer Höhenverlagerung, d.h. einer Verschwenkung des Steuerabschnitts, wodurch aufgrund der einstückigen Fortführung über die Schwenkachse hinaus in den Ausgleichsfortsatz zwangsläufig auch der Ausgleichsfortsatz in gewünschter Weise verschwenkt wird.

In weiterer Ausgestaltung ist das Umgriffsprofil am Steuerschlitten starr angeordnet. Eine Längsverlagerung des Steuerschlittens führt daher zwangsläufig zu einer komplementären Längsverlagerung des Umgriffsprofils, wodurch die gewünschten Bewegungsübertragungen auf die gekrümmte Steuerleiste mit einfachen Mitteln bewirkt werden.

Gemäß der Erfindung sind der Steuerschlitten und die vordere Führungsanordnung in einer gemeinsamen Führungsbahn verfahrbar. Demzufolge erfolgt eine Längsverlagerung von Steuerschlitten und Führungsanordnungen auf gegenüberliegenden Längsseiten des Dachteils in einer gemeinsamen, einzelnen Führungsebene, wodurch das Antriebssystem für das Dachteil eine lediglich geringe Bauhöhe beansprucht. Hierdurch wird zwangsläufig eine Erhöhung der Kopffreiheit des Fahrzeuginnenraums des Personenkraftwagens erzielt.

Gemäß der Erfindung ist der vorderen Führungsanordnung eine Rastanordnung zugeordnet, die die Führungsanordnung abhängig von einer Bewegungsstellung des Dachteils und der Trägerleiste relativ zu der Führungsbahn blockiert oder für eine Längsverlagerung freigibt. Die Rastanordnung hält die vordere Führungsanordnung in einer definierten Stellung, während das bewegliche Dachteil zwischen seiner Schließstellung und seiner Lüfterstellung verlagerbar ist. Zudem hält die Rastanordnung die vordere Führungsanordnung auch noch in der blockierten Stellung, wenn das Dachteil relativ zur Dachaußenkontur des Dachbereichs nach unten verlagert wird, um eine Verschiebung des Dachteils nach hinten in die Öffnungsstellung unter den Dachbereich einzuleiten.

Gemäß der Erfindung weist die Rastanordnung einen Rasthebel auf, der in seiner Sperrstellung formschlüssig in einer Rastaufnahme der Führungsbahn abgestützt ist, und der Steuerschlitten weist eine Mitnehmeranordnung auf, die den Rasthebel abhängig von der Bewegungsstellung des Dachteils und der Trägerleiste aus der Rastaufnahme aushebt und den Rasthebel mitnimmt. Die Mitnehmeranordnung gewährleistet, dass die vordere Führungsanordnung für eine Mitnahme des Dachteils nach hinten in die Öffnungsstellung freigegeben wird.

Gemäß der Erfindung ist der Rasthebel an der vorderen Führungsanordnung um die Schwenkachse des Ausgleichshebels schwenkbeweglich angelenkt. Dies ist eine besonders einfache und funktionssichere Anordnung des Rasthebels.

In weiterer Ausgestaltung der Erfindung ist der Rasthebel ausgehend von der Schwenkachse nach hinten erstreckt und weist an seinem hinteren Stirnendbereich eine Rastnase auf, die formschlüssig mit der Rastaufnahme der Führungsbahn zusammenwirkt. Die Rastnase in Verbindung mit der stationären Rastaufnahme in der Führungsbahn bewirkt die Sperrung oder Freigabe des Rasthebels und damit der vorderen Führungsanordnung, je nach Aushubstellung oder Sperrstellung der Rastnase.

Weitere Vorteile und Merkmale der Erfindung ergeben sich aus den Ansprüchen sowie aus der nachfolgenden Beschreibung einer bevorzugten Ausführungsform der Erfindung, die anhand der Zeichnungen dargestellt ist.
- Fig. 1 bis 4: zeigen ein Dachmodul eines Personenkraftwagens mit einem beweglichen Dachteil, das über eine Ausführungsform eines erfindungsgemäßen Antriebssystems in die dargestellten unterschiedlichen Bewegungsstellungen überführbar ist,
- Fig. 5: in vergrößerter Seitenansicht das Antriebssystem für das Dachteil nach den Fig. 1 bis 4 in einer Schließstellung des Dachteils,
- Fig. 6: eine Draufsicht auf das Antriebssystem nach Fig. 5 unter Weglassung einer Führungsschienenanordnung,
- Fig. 7: in vergrößerter perspektivischer Darstellung das Antriebssystem nach den Fig. 5 und 6 in der Schließstellung nach Fig. 1,
- Fig. 8: das Antriebssystem nach Fig. 5 in einer Lüfterstellung gemäß Fig. 2,
- Fig. 9: eine Draufsicht auf das Antriebssystem nach Fig. 8,
- Fig. 10: in vergrößerter perspektivischer Darstellung das Antriebssystem in der Lüfterstellung gemäß den Fig. 8 und 9,
- Fig. 11: das Antriebssystem nach den Fig. 5 und 8 in einer Zwischenstellung gemäß Fig. 3,
- Fig. 12: das Antriebssystem nach Fig. 11 in einer Öffnungsstellung gemäß Fig. 4,
- Fig. 13: eine Draufsicht auf das Antriebssystem nach den Fig. 11 oder 12 und
- Fig. 14: in vergrößerter perspektivischer Darstellung das Antriebssystem gemäß den Fig. 11 oder 12, d.h. in der Zwischenstellung oder der Öffnungsstellung.

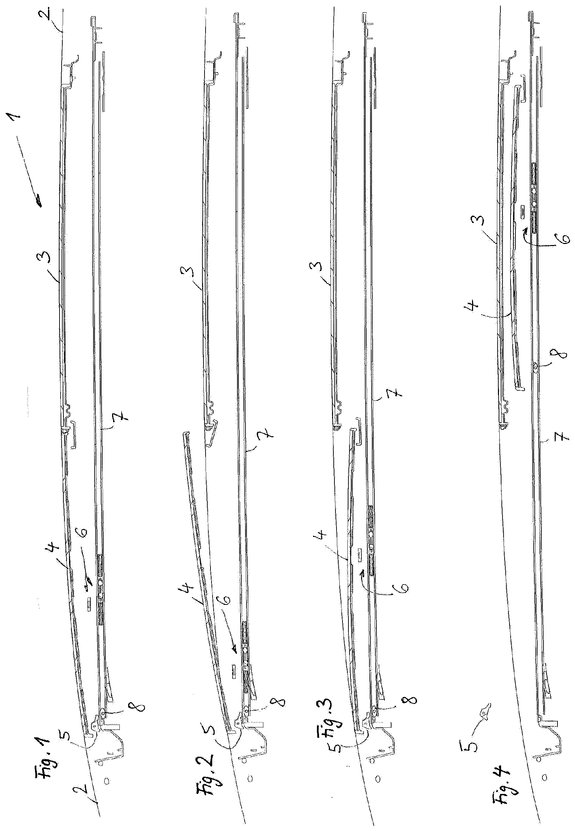

Ein Personenkraftwagen weist gemäß den Fig. 1 bis 4 ein Fahrzeugdach 2 auf, in dem ein Dachmodul 1 integriert ist. Das Dachmodul 1 weist einen feststehenden Dachbereich 3 sowie ein bewegliches Dachteil 4 auf, das - in Fahrzeuglängsrichtung gesehen - vor dem feststehenden Dachbereich 3 angeordnet ist. In einer Schließstellung des beweglichen Dachteils 4 (Fig. 1) schließt eine Oberfläche des Dachteils 4 bündig mit einer Dachaußenkontur des Fahrzeugdachs 2 und des feststehenden Dachbereichs 3 ab. Das bewegliche Dachteil 4 ist mittels eines nachfolgend näher beschriebenen Antriebssystems, das anhand der Bezugszeichen 6 bis 8 in den Fig. 1 bis 4 angedeutet ist, zwischen der Schließstellung gemäß Fig. 1, einer Lüfterstellung gemäß Fig. 2 und einer Öffnungsstellung gemäß Fig. 4 verlagerbar. In der Lüfterstellung ist das Dachteil 4 um eine in Fahrzeugquerrichtung erstreckte Schwenkachse im Bereich eines vorderen Stirnrandbereichs nach oben geschwenkt, so dass ein hinterer Stirnrandbereich des Dachteils 4 über eine Außenkontur des hinteren Dachbereichs 3 nach oben abragt. Zur Überführung des Dachteils 4 aus der Lüfterstellung oder aus der Schließstellung in die Öffnungsstellung gemäß Fig. 4 wird das Dachteil 4 über eine Zwischenstellung gemäß Fig. 3 nach unten abgesenkt, um unterhalb des feststehenden Dachbereichs 3 in Fahrzeuglängsrichtung nach hinten verfahren werden zu können.

Das Dachmodul weist zudem einen Ausstellhebel 5 auf, der im Bereich eines vorderen Stirnrands des durch das Dachteil 4 verschließbaren Dachausschnitts vorgesehen ist und der in der Öffnungsstellung des Dachteils 4 gemäß Fig. 4 nach oben ausschwenkt, um ein Strömungsleitgebilde aufzuspannen, das Windgeräusche im Fahrbetrieb bei geöffnetem Dachteil 4 reduziert.

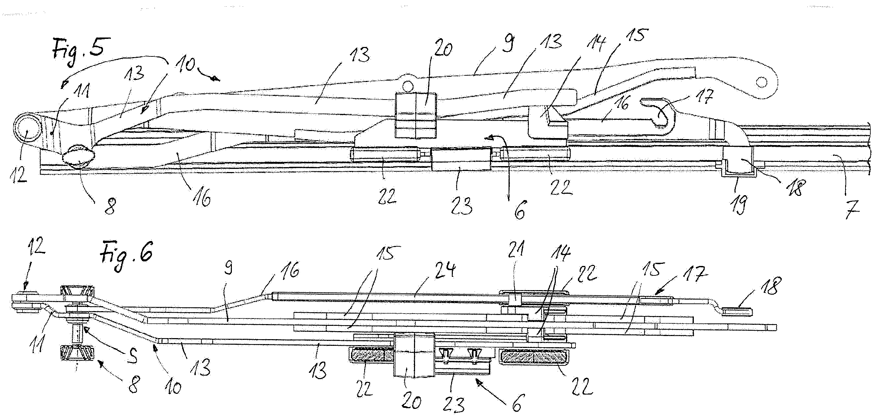

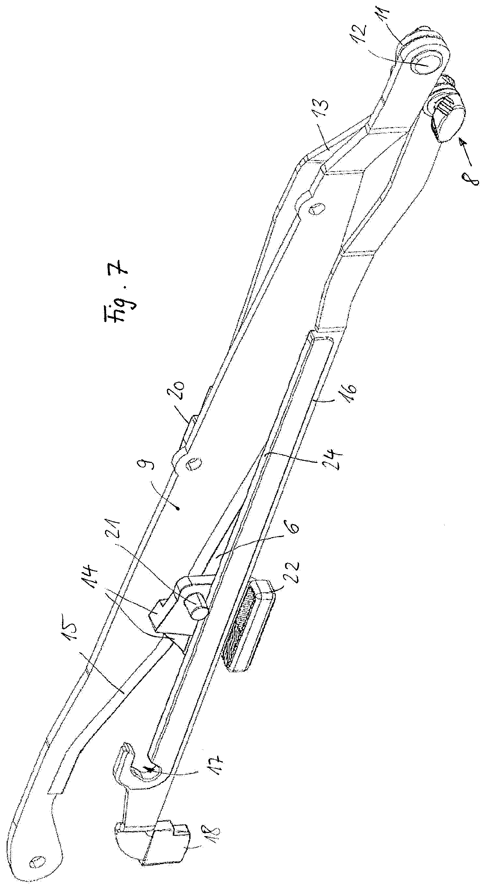

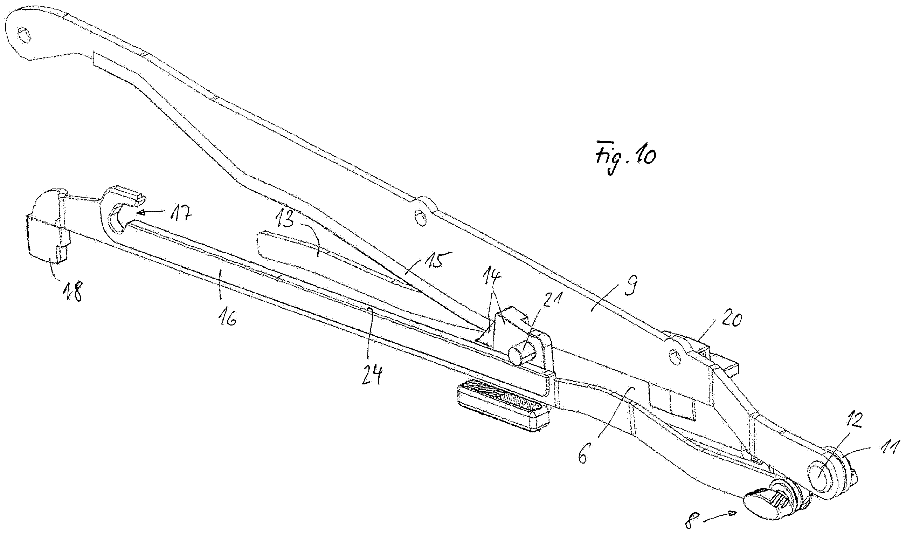

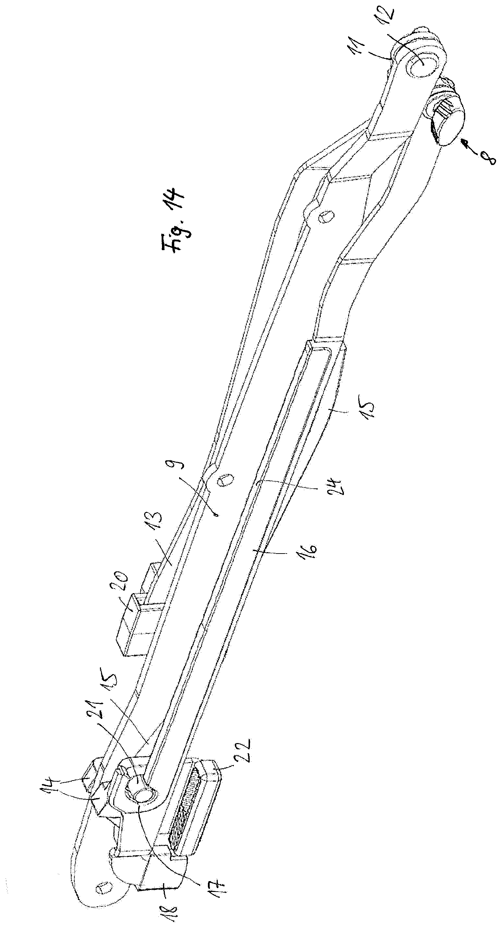

Zur Verlagerung des Dachteils 4 zwischen diesen verschiedenen Bewegungsstellungen ist ein Antriebssystem vorgesehen, das anhand der Fig. 5 bis 14 näher beschrieben wird. Das Dachteil 4 ist an seinen gegenüberliegenden Seiten an jeweils einer Trägerleiste 9 befestigt, die Teil des Antriebssystems sind. Das Antriebssystem weist auf den gegenüberliegenden Seiten des beweglichen Dachteils 4 fahrzeugfest jeweils eine Führungsschienenanordnung 7 auf, die als Führungsbahn im Sinne der Erfindung dient. Die beiden Führungsschienenanordnungen 7 auf gegenüberliegenden Seiten des beweglichen Dachteils 4 erstrecken sich jeweils in Fahrzeuglängsrichtung parallel zueinander. In jeder Führungsschienenanordnung ist jeweils ein Steuerschlitten 6 linearbeweglich verschiebbar geführt. Jeder Steuerschlitten 6 ist über jeweils ein Antriebsmittel in Form eines längserstreckten Zug-/Druckmittels, vorzugsweise in Form einer Flexwelle, längs der jeweiligen Führungsschienenanordnung 7 verschiebbar. Die beiden Zug-/Druckmittel sind synchron angetrieben durch eine nicht dargestellte elektromotorische Antriebseinheit, so dass die beiden Steuerschlitten 6 auf den gegenüberliegenden Seiten des beweglichen Dachteils 4 synchron zueinander in den Führungsschienenanordnungen 7 verlagert werden. Jeder Steuerschlitten 6 wirkt über eine nachfolgend näher beschriebene vordere Führungsanordnung 8 sowie eine nachfolgend ebenfalls näher beschriebene Ausstellmechanik auf die jeweilige Trägerleiste 9, die jeweils an einer Seite des Dachteils 4 befestigt ist. Hierdurch sind die gewünschten Ausstell-, Absenk- und Längsverlagerungsbewegungen des Dachteils 4 erzielbar. Aus Übersichtlichkeitsgründen wird anhand der Fig. 5 bis 14 das Antriebssystem lediglich für die in Fahrtrichtung gesehen linke Antriebsseite des Dachteils 4 beschrieben. Die in Fahrtrichtung gesehen rechte Antriebsseite des Antriebssystems für das Dachteil 4 ist spiegelsymmetrisch, im Übrigen jedoch identisch gestaltet, so dass die Ausführungen zu den Fig. 5 bis 14 in gleicher Weise für diese rechte Antriebsseite gelten.

Die Trägerleiste 9 ist um ein Schwenkgelenk 12 an ihrem vorderen Stirnendbereich an einem Ausgleichshebel 10 schwenkbeweglich gelagert, wobei das Schwenkgelenk 12 eine in Fahrzeugquerrichtung erstreckte Gelenkachse definiert. Der Ausgleichshebel 10 ist an einer vorderen Führungsanordnung 8 um eine Schwenkachse S schwenkbeweglich gelagert, die parallel zu der Gelenkachse des Schwenkgelenks 12 erstreckt ist. Die Führungsanordnung 8 weist zwei nicht näher bezeichnete Gleitfüße auf, die in der Führungsschienenanordnung 7 längsverschiebbar geführt sind. Zwischen den Gleitfüßen wird eine die Schwenkachse S definierende Schwenklagerung sowohl für den Ausgleichshebel 10 als auch für ein vorderes Stirnende eines nachfolgend näher beschriebenen Rasthebels 16 definiert, der sich ausgehend von der vorderen Führungsanordnung 8 in Längsrichtung der Führungsschienenanordnung 7 nach hinten erstreckt. Der Ausgleichshebel 10 weist einen Ausgleichsfortsatz 11 auf, der sich ausgehend von der die Schwenkachse S definierenden Schwenklagerung im Bereich der vorderen Führungsanordnung 8 schräg nach oben und nach vorne erstreckt. An einem vorderen Stirnendbereich des Ausgleichsfortsatzes 11 ist das Schwenkgelenk 12 für die Trägerleiste 9 angeordnet. In entgegengesetzter Richtung nach hinten erstreckt sich ein Steuerabschnitt 13, der wie der Ausgleichsfortsatz 11 einstückiger Teil des Ausgleichshebels 10 ist. Der Steuerabschnitt 13 bildet eine formstabile Steuerleiste, die sich in Längsrichtung frei nach hinten erstreckt und die mit mehreren in Fahrzeughochrichtung erstreckten unterschiedlichen Krümmungsabschnitten versehen ist. Die unterschiedliche Gestaltung der Krümmungsabschnitte ist anhand der Seitenansichten gemäß den Fig. 5, 8, 11, 12 gut erkennbar. Die Steuerleiste 13 erstreckt sich frei nach hinten und ist im Bereich des Steuerschlittens 6 von einem Umgriffsprofil 20 umgriffen. Die Steuerleiste 13 ist in dem Umgriffsprofil 20 linearbeweglich verschiebbar geführt. Das Umgriffsprofil 20 ist starr an dem Steuerschlitten 6 angeordnet, der wiederum über mehrere Gleitfüße 22 in der Führungsschienenanordnung 7 längsverschiebbar geführt ist. Zudem weist der Steuerschlitten 6 einen Angriffskörper 23 auf, an dem das das Antriebsmittel bildende Zug-/Druckmittel der Antriebseinheit befestigt ist, um den Steuerschlitten 6 längs der Führungsschienenanordnung 7 nach vorne oder nach hinten zu verschieben. Dadurch, dass die Steuerleiste 13 mit in Fahrzeughochrichtung erstreckten Krümmungsabschnitten versehen ist und die Steuerleiste 13 über ihre Länge einen gleichbleibenden Querschnitt aufweist, der linearbeweglich in dem Umgriffsprofil 20 geführt ist, wird die Steuerleiste 13 je nach der momentanen Verfahrstellung des Steuerschlittens 6 um die Schwenkachse S geringfügig verschwenkt. Dadurch führt zwangsläufig auch der Ausgleichsfortsatz 11 gleichsinnige, geringe Schwenkbewegungen relativ zur Schwenkachse S durch, wodurch das Schwenkgelenk 12 zwangsläufig relativ zur Schwenkachse S geringfügig nach oben oder nach unten verschwenkt wird. Dies führt zu gewünschten Ausgleichsbewegungen des vorderen Stirnendbereichs der Trägerleiste 9, auf die nachfolgend näher eingegangen wird.

Die Trägerleiste 9 weist im Übrigen ein in einer vertikalen Fahrzeuglängsebene gekrümmte Steuerkontur 15 auf, die an einem unteren Randbereich der Trägerleiste 9 über einen Großteil der Länge der Trägerleiste 9 vorgesehen ist. Die Steuerkulisse 15 ist fest an der Trägerleiste 9 angeordnet und erstreckt sich in identischer Weise auf gegenüberliegenden Längsseiten der Trägerleiste 9 (siehe insbesondere Fig. 6). Die Steuerkulisse 15 wird beidseitig umgriffen von jeweils einem Kulissenprofil 14, die starr an dem Steuerschlitten 6 angeordnet sind. Zwischen den Kulissensteinen 14 und der Steuerkulisse 15 besteht in Fahrzeughochrichtung ein Formschluss, wohingegen die Steuerkulisse 15 an den Kulissensteinen 14 in Fahrzeuglängsrichtung entlanggleiten kann. In Fahrzeughochrichtung umgreifen die Kulissensteine 14 die Steuerkulisse 15 im Wesentlichen spielfrei, so dass bei einer Verlagerung des Steuerschlittens 6 die Trägerleiste 9 aufgrund der Zwangsführungen über die Kulissensteine 14 und die Steuerkulisse 15 zwangsläufig um die Gelenkachse des Schwenkgelenks 12 nach oben und nach unten verlagert wird.

Zusätzlich weist jede Antriebsseite des Antriebssystems noch einen Rasthebel 16 auf, der sich ausgehend von der vorderen Führungsanordnung 8 nach hinten erstreckt und an seinem hinteren Stirnendbereich mit einer nach unten abragenden Rastnase 18 versehen ist. Die Führungsschienenanordnung 7 weist in ihrem Boden eine zu der Rastnase 18 komplementäre Rastaufnahme 19 auf, in der die Rastnase 18 in der Raststellung des Rasthebels 16 formschlüssig gehalten ist. Der Rasthebel 16 ist in seinem hinteren Bereich in geringem Abstand zu der Rastnase 18 zudem mit einer nach vorne schräg nach oben offenen Mitnehmerkontur 17 versehen, die als hakenartige Aufnahme gestaltet ist. Mit dieser Mitnehmerkontur 17 wirkt ein Mitnehmerzapfen 21 zusammen, der auf einer zum Umgriffsprofil 20 gegenüberliegenden Seite in Fahrzeugquerrichtung von dem Steuerschlitten 6 abragt, und der an dem Steuerschlitten 6 befestigt ist. Der Mitnehmerzapfen 21 überlagert den Rasthebel 16 in Fahrzeugquerrichtung, wie anhand der Fig. 6, 7, 9, 10, 13, 14 erkennbar ist. Der Rasthebel 16 ist im Bewegungsbereich des Mitnehmerzapfens 21 mit einer geradlinigen und ebenen Oberfläche versehen, die eine Gleitfläche 24 für den Mitnehmerzapfen 21 bietet. Die auch als Mitnehmerkulisse 17 bezeichnete Mitnehmerkontur des Rasthebels 16 weist eine Anlaufschräge auf, die derart gestaltet ist, dass der Mitnehmerzapfen 21 bei einem Eintauchen in die Mitnehmerkulisse 17 die Rastnase 18 zwangsläufig nach oben aushebt, indem der Mitnehmerzapfen 21 längs der schiefen Ebene der Mitnehmerkontur 17 entlanggleitet und so den Rasthebel 16 um die Schwenkachse S geringfügig nach oben verschwenkt. Dadurch kommt der Rasthebel 16 aus seiner Sperrstellung in der Rastaufnahme 19 frei und kann gemeinsam mit dem Steuerschlitten 6 in der Führungsschienenanordnung 7 verlagert werden.

Wie anhand der Fig. 5 bis 14 erkennbar ist, erstreckt sich der Ausgleichshebel 10 mit seiner Steuerleiste 13 parallel seitlich außerhalb der Trägerleiste 9, wohingegen der Rasthebel 16 mit seiner Gleitfläche 24 parallel innenseitig der Trägerleiste 9 verläuft. Demzufolge ragt auch der Mitnehmerzapfen 21 vom Steuerschlitten 6 aus zur Fahrzeugmitte hin nach innen ab, wohingegen das Umgriffsprofil 20 die Steuerleiste 13 des Ausgleichshebels 10 im Bereich der Außenseite des Steuerschlittens 6 umgreift.

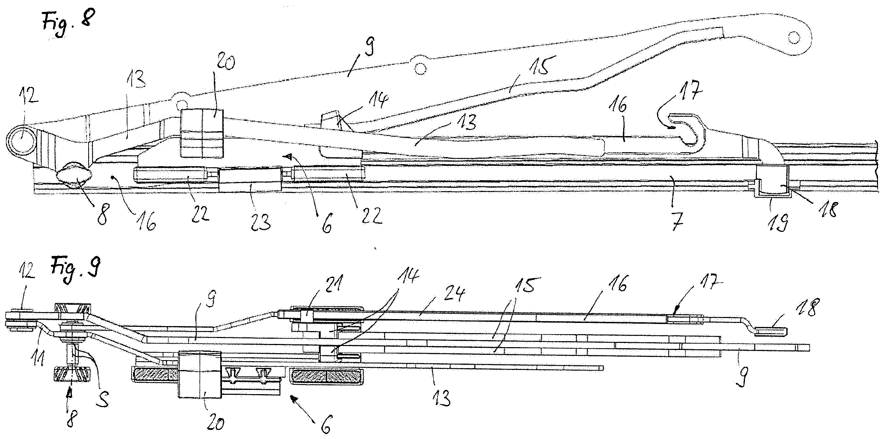

In der Schließstellung des Dachteils 4 gemäß Fig. 1 befindet sich das Antriebssystem mit Trägerleiste, Ausgleichshebel 10, Rasthebel 16 und Steuerschlitten 6 in der Stellung, wie sie anhand der Fig. 5 bis 7 dargestellt ist. In der Lüfterstellung des Dachteils 4 ist der Steuerschlitten 6 gemäß den Fig. 8 bis 10 in der Führungsschienenanordnung 7 nach vorne verfahren, wobei die Rastnase 18 aufgrund der Abstützung des Mitnehmerzapfens 21 auf der Gleitfläche 24 in der Rastaufnahme 19 verbleibt.

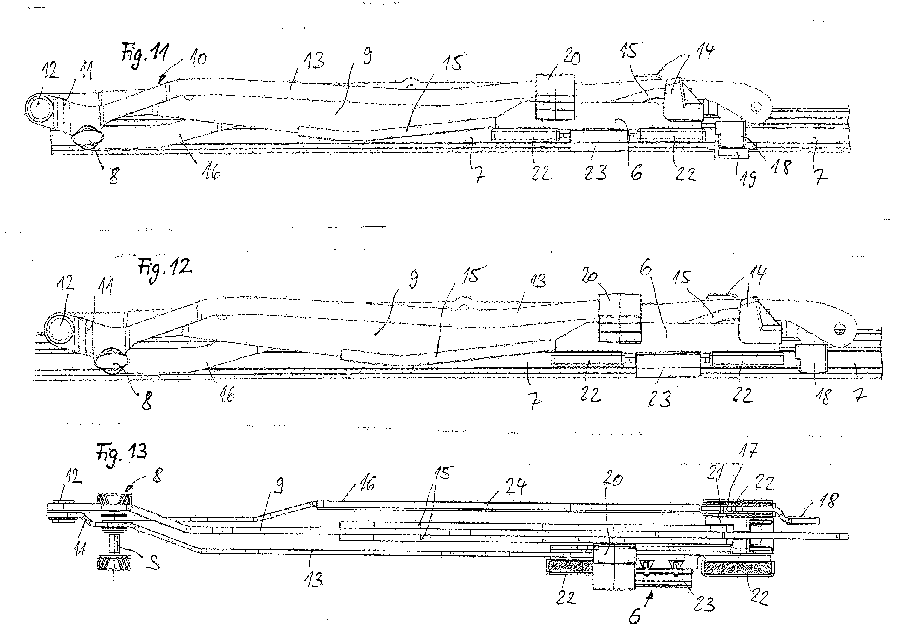

Wenn nun der Steuerschlitten 6 aus dieser Stellung gemäß den Fig. 8 bis 10 längs der Führungsschienenanordnung 7 nach hinten unter den feststehenden Dachbereich 3 verfahren wird, wird die Trägerleiste 9 zwangsläufig in die Zwischenstellung gemäß Fig. 3 nach unten gezogen. Solange der Steuerschlitten 6 mit dem Mitnehmerzapfen 21 die Mitnehmerkulisse 17 des Rasthebels 16 noch nicht erreicht hat, bleibt die Rastnase 18 in der Rastaufnahme 19 der Führungsschienenanordnung 7 gefangen. In Fig. 11 ist die Zwischenstellung erreicht, die der Darstellung nach Fig. 3 entspricht. In dieser Zwischenstellung ist der Mitnehmerzapfen 21 in die Mitnehmerkulisse 17 des Rasthebels 16 eingetaucht und zieht die Rastnase 18 zwangsläufig aus der Rastaufnahme 19 der Führungsschienenanordnung 7 nach oben heraus. Bis zu diesem Zeitpunkt hat der Rasthebel 16 die vordere Führungsanordnung 8 gegen eine Verfahrbewegung nach hinten gesperrt. Durch das Freikommen der Rastnase 18 aus der Rastaufnahme 19 und die Mitnahme des Rasthebels 16 durch den Mitnehmerzapfen 21 kann nun die vordere Führungsanordnung 8 gemeinsam mit dem Steuerschlitten 6 nach hinten bewegt werden, so dass das Dachteil 4 unterhalb des feststehenden Dachbereichs 3 entlangtauchen kann. Sobald der Steuerschlitten 6 seine hintere Endlage gemäß Fig. 4 erreicht hat, ist das Dachteil 4 vollständig unterhalb des feststehenden Dachbereichs 3 angeordnet, so dass das Dachteil 4 sich in seiner Öffnungsstellung befindet, in der der durch das Dachteil 4 zu verschließende Dachausschnitt vollständig freigegeben ist.

Wenn der Dachteil 4 aus dieser Öffnungsstellung gemäß Fig. 4 wieder nach vorne verlagert werden soll, wird in einfacher Weise der Steuerschlitten 6 wieder nach vorne verfahren. Dabei entfernt der Mitnehmerstein 21 sich wieder nach vorne aus der Mitnehmerkulisse 17, so dass der Mitnehmerstein 21 wieder auf der Gleitfläche 24 des Rasthebels 16 aufliegt. Der Steuerschlitten 6 nimmt die Trägerleiste 9 bei seiner Verfahrbewegung nach vorne mit. Durch den Druck des Mitnehmerzapfens 21 auf die Gleitfläche 24 taucht die Rastnase 18 zwangsläufig in die Rastaufnahme 19 wieder ein, sobald der Rasthebel 16 die Rastaufnahme 17 in der Führungsschienenanordnung 7 überfährt. Dadurch ist die vordere Führungsanordnung 8 wieder innerhalb der Führungsschienenanordnung 7 blockiert, so dass über die Steuerkulisse 15 und die Steuerleiste 13 sowie den Ausgleichsfortsatz 11 die Trägerleiste 9 wieder so nach oben bewegt werden kann, dass das Dachteil 4 in seine Schließstellung gemäß Fig. 1 überführt wird. Die Ausgleichsbewegungen, die das Schwenkgelenk 12 um die Schwenkachse S durchführt, gewährleisten, dass der vordere und der hintere Stirnrandbereich des Dachteils 4 an den entsprechenden feststehenden Dachbegrenzungsflächen wie einem vorderen Dachrahmen oder einem hinteren Rand des durch das Dachteil 4 zu verschließenden Dachausschnitts vorbeibewegt werden kann, ohne mit den entsprechenden Randabschnitten in Berührung zu gelangen.

## Patentansprüche

1. Antriebssystem für ein bewegliches Dachteil eines Kraftfahrzeug-Dachmoduls, mit wenigstens einer Trägerleiste (9), die seitlich an dem Dachteil (4) befestigt ist, mit wenigstens einem Steuerschlitten (6), der über ein Antriebsmittel in einer seitlich längs des Dachteils (4) verlaufenden Führungsbahn (7) linearbeweglich verfahrbar ist, mit wenigstens einer Ausstellmechanik, die die Trägerleiste (9) und damit das Dachteil (4) verschwenkt, anhebt und absenkt, sowie mit einem in Fahrzeuglängsrichtung hinter dem beweglichen Dachteil (4) angeordneten, feststehenden Dachbereich (3), wobei das bewegliche Dachteil (4) aus einer Schließstellung in eine Lüfterstellung ausschwenkbar und in eine Öffnungsstellung absenkbar und nach hinten unter den Dachbereich (3) verfahrbar ist, wobei die Trägerleiste (9) an ihrem vorderen Stirnendbereich an einem Ausgleichselement (10) um ein Schwenkgelenk (12) schwenkbeweglich gelagert ist, das relativ zu einer vorderen Führungsanordnung (8) der Ausstellmechanik abhängig von der Bewegungsstellung des Dachteils (4) in unterschiedliche Positionen verlagerbar ist, wobei das Ausgleichselement als Ausgleichshebel (10) gestaltet ist, der an der Führungsanordnung (8) um eine Schwenkachse (S) schwenkbeweglich gelagert ist, und der einen Steuerabschnitt (13) sowie einen Ausgleichsfortsatz (11) umfasst, die relativ zu der Schwenkachse (S) zu gegenüberliegenden Seiten abragen, wobei der Ausgleichsfortsatz (11) das Schwenkgelenk (12) der Trägerleiste (9) trägt und der Steuerabschnitt mit dem Steuerschlitten (6) mechanisch gekoppelt ist, dass der Steuerschlitten (6) und die vordere Führungsanordnung (8) in einer gemeinsamen Führungsbahn (7) verfahrbar sind, dass der vorderen Führungsanordnung (8) eine Rastanordnung (18, 19) zugeordnet ist, die die Führungsanordnung (8) abhängig von einer Bewegungsstellung des Dachteils (4) und der Trägerleiste (9) relativ zu der Führungsbahn (7) blockiert oder für eine Längsverlagerung freigibt, **dadurch gekennzeichnet, dass** die Rastanordnung einen Rasthebel (16) aufweist, der in seiner Sperrstellung formschlüssig in einer Rastaufnahme (19) der Führungsbahn (7) abgestützt ist, und dass der Steuerschlitten (6) eine Mitnehmeranordnung aufweist, die den Rasthebel (16) abhängig von der Bewegungsstellung des Dachteils (4) und der Trägerleiste (9) aus der Rastaufnahme (19) aushebt und den Rasthebel (16) mitnimmt, und dass der Rasthebel (16) an der vorderen Führungsanordnung (8) um die Schwenkachse (S) des Ausgleichshebels (10) schwenkbeweglich angelenkt ist.

2. Antriebssystem nach Anspruch 1, **dadurch gekennzeichnet, dass** die Mitnehmeranordnung als Mitnehmerzapfen (21) gestaltet ist, dass der Rasthebel (16) an seinem hinteren Stirnendbereich mit einer nach unten abragenden Rastnase (18) versehen ist, und dass der Rasthebel (16) in seinem hinteren Bereich in geringem Abstand zu der Rastnase (18) mit einer nach vorne und schräg nach oben offenen Mitnehmerkontur versehen ist, mit der der Mitnehmerzapfen (21) zusammenwirkt, und die als hakenartige Aufnahme gestaltet ist.

3. Antriebssystem nach Anspruch 1 oder 2, **dadurch gekennzeichnet, dass** der Rasthebel (16) ausgehend von der Schwenkachse (S) nach hinten erstreckt ist und an seinem hinteren Stirnendbereich eine Rastnase (18) aufweist, die formschlüssig mit der Rastaufnahme (19) der Führungsbahn (7) zusammenwirkt.

## Claims

1. Drive system for a movable roof part of a motor vehicle roof module, with at least one support bar (9) which is fastened laterally to the roof part (4), with at least one control carriage (6) which is movable linearly via a drive means in a guide track (7) running laterally along the roof part (4), with at least one deployment mechanism which pivots, raises and lowers the support bar (9) and therefore the roof part (4), and with a stationary roof region (3) arranged behind the movable roof part (4) in the longitudinal direction of the vehicle, wherein the movable roof part (4) is pivotable from a closed position into a ventilation position and is lowerable into an open position and is movable rearward under the roof region (3), wherein the support bar (9) at the front end region thereof is mounted so as to be pivotable about a pivot joint (12) on a compensating element (10) which, depending on the movement position of the roof part (4), is shiftable relative to a front guide arrangement (8) of the deployment mechanism into different positions, wherein the compensating element is designed as a compensating lever (10) which is mounted on the guide arrangement (8) so as to be pivotable about a pivot axis (S), and which comprises a control section (13) and a compensating extension (11), which protrude on opposite sides relative to the pivot axis (S), wherein the compensating extension (11) bears the pivot joint (12) of the support bar (9) and the control section is coupled mechanically to the control carriage (6), that the control carriage (6) and the front guide arrangement (8) are movable in a common guide track (7), that the front guide arrangement (8) is assigned a latching arrangement (18, 19) which, depending on a movement position of the roof part (4) and of the support bar (9) relative to the guide track (7), blocks the guide arrangement (8) or releases same for longitudinal shifting,
**characterized in that**
the latching arrangement has a latching lever (16) which, in the locking position thereof, is supported in a form-fitting manner in a latching receptacle (19) of the guide track (7), and
**in that** the control carriage (6) has a driver arrangement which, depending on the movement position of the roof part (4) and of the support bar (9), lifts the latching lever (16) out of the latching receptacle (19) and carries along the latching lever (16),
and
**in that** the latching lever (16) is articulated to the front guide arrangement (8) so as to be pivotable about the pivot axis (S) of the compensating lever (10).

2. Drive system according to claim 1, **characterized in that** the driver arrangement is a driving pin (21), that the latching lever (16) is provided on its rear end region with a downwardly protruding latching lug (18), and **in that** the latching lever (16) is provided, in the rear region thereof, at a small distance from the latching lug (18) with a driver contour which is open forward and obliquely upward and the driving pin (21) interacts with said contour, which driver contour is configured as a hook-like receptacle.

3. Drive system according to claim 1 or 2, **characterized in that** the latching lever (16) is extended rearward from the pivot axis (S) and, on the rear end region thereof, has a latching lug (18) which interacts in a form-fitting manner with the latching receptacle (19) of the guide track (7).

## Revendications

1. Système d'entrainement pour une partie de toit mobile d'un module de toit de véhicule automobile, avec au moins une barre de support (9) fixée latéralement sur la partie de toit (4), avec au moins un chariot de commande (6) déplaçable en mouvement linéaire par le biais d'un moyen d'entrainement dans une voie de guidage (7) s'étendant latéralement le long de la partie de toit (4), avec au moins un mécanisme de levage pour pivoter, soulever et abaisser la barre de support (9) et ainsi la partie de toit (4), et avec une zone de toit (3) stationnaire arrangée derrière la partie de toit (4) mobile dans la direction longitudinale du véhicule, dans lequel la partie de toit (4) mobile est pivotable d'une position fermée vers une position de ventilation et abaissable vers une position ouverte et vers l'arrière sous la zone de toit (3), dans lequel la barre de support (9) sur sa zone frontale avant est montée sur un élément de compensation (10) pour un mouvement pivotant autour d'une articulation pivotante (12), mobile par rapport à un arrangement de guidage (8) avant du mécanisme de levage vers positions différentes en fonction de la situation de déplacement de la partie de toit (4), dans lequel l'élément de compensation est configuré sous forme de levier de compensation (10) monté sur l'arrangement de guidage (8) pour un mouvement pivotant autour d'un axe de pivotement (S), et qui comprend une section de commande (13) ainsi qu'un prolongement de compensation (11) faisant saillie par rapport à l'axe de pivotement (S) vers côtés opposés, dans lequel le prolongement de compensation (11) porte l'articulation pivotante (12) de la barre de support (9) et la section de commande est couplée mécaniquement au chariot de commande (6), que le chariot de commande (6) et l'arrangement de guidage (8) avant sont déplaçables dans une voie de guidage (7) commune, qu'un arrangement d'encliquetage (18, 19) est associé à l'arrangement de guidage (8) avant pour provoquer, en fonction d'une situation de déplacement de la partie de toit (4) et de la barre de support (9) par rapport à la voie de guidage (7), un blocage de l'arrangement de guidage (8) ou son déblocage pour un déplacement longitudinal,
**caractérisé en ce que**
l'arrangement d'encliquetage présente un levier d'arrêt (16) qui, dans sa situation de blocage, est appuyé dans un logement d'arrêt (19) de la voie de guidage (7) par complémentarité de formes, et **en ce que** le chariot de commande (6) présente un arrangement d'entraîneur qui, en fonction de la situation de déplacement de la partie de toit (4) et de la barre de support (9), enlève le levier d'arrêt (16) du logement d'arrêt (19) et entraîne le levier d'arrêt (16), et **en ce que** le levier d'arrêt (16) est articulé à l'arrangement de guidage (8) avant pour un mouvement pivotant autour de l'axe de pivotement (S) du levier de compensation (10).

2. Système d'entrainement selon la revendication 1, **caractérisé en ce que** l'arrangement d'entraîneur est configuré sous forme de tourillon entraîneur (21), **en ce que** le levier d'arrêt (16) sur sa zone d'extrémité arrière est prévu d'un ergot d'encliquetage (18) faisant saillie vers le bas, **en ce que** le levier d'arrêt (16), dans sa zone arrière à faible distance de l'ergot d'encliquetage (18), est prévu d'un contour entraîneur ouvert vers l'avant et obliquement vers le haut, le tourillon entraîneur (21) coopérant avec ledit contour, et ledit contour configuré sous forme de logement crochu.

3. Système d'entraînement selon la revendication 1 ou 2, **caractérisé en ce que** le levier d'arrêt (16) s'étend à partir de l'axe de pivotement (S) vers l'arrière et présente un ergot d'encliquetage (18) sur sa zone d'extrémité arrière, ledit ergot coopérant avec le logement d'arrêt (19) de la voie de guidage (7) par complémentarité de formes.
